# EUROPÄISCHE PATENTSCHRIFT

(11) **EP 2 898 232 B1**
(45) Veröffentlichungstag und Bekanntmachung des Hinweises auf die Patenterteilung: **05.06.2019**
(21) Anmeldenummer: 13763050.5
(22) Anmeldetag: 16.09.2013
(51) Int. Cl.: F16C 43/04, F16C 19/10, F16C 33/60

(54) **WÄLZLAGER UND RUNDLÄUFERVORRICHTUNG MIT WÄLZLAGER**
ROLLING BEARING, AND ROTARY DEVICE WITH ROLLING BEARING
ROULEMENT ET DISPOSITIF TOURNANT À ROULEMENT

(30) Priorität: 19.09.2012 DE 102012108819
(43) Veröffentlichungstag der Anmeldung: 29.07.2015
(73) Patentinhaber: Nordischer Maschinenbau Rud. Baader GmbH + Co. KG, 23560 Lübeck (DE)
(72) Erfinder: ROELOFSEN, Johan H. J., NL-7031GK Wehl (NL)
(74) Vertreter: Stork Bamberger Patentanwälte PartmbB
(86) Internationale Anmeldenummer: PCT/EP2013/069147
(87) Internationale Veröffentlichungsnummer: WO 2014/044634

(56) Entgegenhaltungen:
- EP-A1- 1 426 639
- DE-A1-102008 024 055
- JP-A- S60 208 625
- US-A- 4 622 860

## Beschreibung

Die vorliegende Erfindung betrifft ein Wälzlager, wie beispielsweise in DE 10 2008 024 055 A1, US 4 622 860 A1 und EP 1 426 639 A1 gezeigt, umfassend einen ersten und einen zweiten Lagerkörper, die relativ zueinander um eine Achse drehbar angeordnet sind, wobei die Lagerkörper erste und zweite Lagerringe mit einander zugewandten und zur Aufnahme einer Mehrzahl von Wälzkörpern ausgebildeten und eingerichteten Laufflächen umfassen, wobei die Wälzkörper zwischen den Laufflächen der Lagerringe angeordnet sind. Des Weiteren betrifft die Erfindung eine Rundläufervorrichtung, umfassend eine feststehende Achse und ein um die feststehende Achse drehbar angeordnetes Karussell zur Aufnahme von zu bearbeitenden Artikeln der fisch- und fleischverarbeitenden Industrie.

Derartige Wälzlager kommen insbesondere in Maschinen und Vorrichtungen der Lebensmittel verarbeitenden Industrie, beispielsweise bei der Bearbeitung und Herstellung von Artikeln der fisch- und fleischverarbeitenden Industrie zum Einsatz. Die bekannten Wälzlager bestehen im Allgemeinen aus zwei Lagerringen, beispielsweise in Form von axialen scheibenförmigen Lagerringen, zwischen denen Wälzkörper, beispielsweise in Form von Rollen, Nadeln, Kugeln oder Kegeln gefasst sind. Bei den bekannten Lagern ist die Verwendung von Schmierstoffen in der Regel unumgänglich.

Die Verwendung von Schmierstoffen ist jedoch im Bereich der Lebensmittelindustrie problematisch. So dürfen einerseits die Schmierstoffe nicht direkt oder indirekt mit den Lebensmittelprodukten in Kontakt kommen. Andererseits stellt sich die aufgrund der hygienischen Anforderung zwingend notwendige Reinigung sämtlicher Maschinenteile einschließlich der Lager aufgrund der mit Schmierstoffen versehenen Lager als sehr problematisch dar. Ein weiterer Nachteil der bekannten Lager besteht darin, dass diese im Wartungs-, Reparatur-, und/oder Reinigungsfall aufwendig zu demontieren sind.

Häufig ist es sogar erforderlich große Teile der Maschinen zu demontieren, um anschließend die Lager zu Revisionszwecken teilweise oder vollständig zerlegen zu können.

Es ist daher Aufgabe der vorliegenden Erfindung, ein Wälzlager der eingangs genannten Art vorzuschlagen, das mit möglichst geringem Aufwand zerlegt und gereinigt werden kann. Des Weiteren besteht die Aufgabe darin, eine Rundläufervorrichtung mit einem solchen Wälzlager vorzuschlagen.

Die Aufgabe wird durch eine Anordnung mit den eingangs genannten Merkmalen dadurch gelöst, dass die Lagerringe mehrteilig mittels voneinander lösbaren Lagerringsegmenten ausgebildet sind. Das erfindungsgemäße Wälzlager bietet eine Reihe von Vorteilen. Aufgrund der mehrteilig ausgebildeten Lagerringsegmente ist das Wälzlager auf besonders einfache Art und Weise zu warten und es können Verschleißteile, wie beispielsweise die Lagerringe und/oder die Wälzkörper, mit geringem Aufwand ausgetauscht werden, ohne dafür das gesamte Lager demontieren zu müssen. Insbesondere ist es mit dem erfindungsgemäßen Lager möglich, nur instandhaltungsbedürftige Komponenten des erfindungsgemäßen Wälzlagers zu Wartungs- und/oder Austauschzwecken zu demontieren, da aufgrund der aus mehreren voneinander lösbaren Lagerringsegmenten gebildeten Lagerringe, die einzelnen Lagerringe nach dem Öffnen des Wälzlagers herausnehmbar sind. Gleiches gilt für den Zusammenbau. Andererseits bietet das erfindungsgemäße Wälzlager weitere Vorteile aus hygienischer Sicht, da das Lager aufgrund der einfachen Zugänglichkeit der einzelnen Komponenten besonders leicht zu reinigen ist.

Die Erfindung zeichnet sich dadurch aus, dass der erste Lagerkörper relativ zu dem zweiten Lagerkörper in axialer Richtung verstellbar eingerichtet und ausgebildet ist. Somit kann das erfindungsgemäße Wälzlager zu Wartungs-, Reparatur-, Inspektions- und Reinigungszwecken auf besonders einfache Weise "geöffnet" und anschließend wieder "geschlossen" werden, ohne das gesamte Wälzlager bzw. die Vorrichtung, in der das Wälzlager verbaut ist, zu demontieren.

Die Erfindung ist dadurch gekennzeichnet, dass die Lagerkörper jeweils ein erstes Ringelement und ein zweites Ringelement umfassen, wobei die ersten Lagerringsegmente an dem ersten Ringelement und die zweiten Lagerringsegmente an dem zweiten Ringelement vollständig umlaufend mittels Verbindungsmitteln lösbar angeordnet sind. Die Ringelemente dienen als Stützelemente, an denen die Lagerringsegmente befestigt und zu den jeweiligen Lagerringen zusammengefügt sind. Darüber hinaus dienen die Ringelemente zugleich als Montagebasis, an die weitere Komponenten, die drehbar bezüglich der Achse gelagert werden sollen, angeordnet werden können.

Die Erfindung zeichnet sich weiterhin dadurch aus, dass das erste Ringelement und/oder das zweite Ringelement zumindest im Wesentlichen scheibenförmig ausgebildet sind/ist. Das Ringelement bietet damit die erforderliche mechanische Stabilität, um die Lagerringsegmente sicher zu fixieren und wirkt sich zugleich vorteilhaft aufgrund einer geringen Bauhöhe aus.

Die Erfindung ist dadurch gekennzeichnet, dass der erste Lagerkörper mit einer hydraulischen Kupplung zum Befestigen des ersten Lagerkörpers an der Achse verbunden ist. Dies bietet den Vorteil, dass der erste Lagerkörper mittels der hydraulischen Kupplung im Bedarfsfall auf besonders einfache Weise von der Achse gelöst bzw. ggf. an dieser angeordnet werden kann.

Gemäß einer bevorzugten Ausbildung der Erfindung umfasst der erste Lagerkörper ein Innenringelement, wobei die inneren Mantelflächen der ersten Lagerringsegmente formschlüssig an der äußeren Mantelfläche des Innenringelements anliegen. Aufgrund der formschlüssigen Anlage können die Lagerringsegmente auf besonders einfache Weise beim Einbau positioniert werden, da die Position zumindest in radialer Richtung durch das Innenringelement vorgegeben ist bzw. durch dieses definiert wird.

Gemäß einer weiteren bevorzugten Ausführungsform ist das Innenringelement an dem ersten Ringelement angeordnet. Anders ausgedrückt bildet das Innenringelement einen Innenzylinder, an dessen einen Ende das erste Ringelement, vorzugsweise stoffschlüssig, angeordnet ist.

Eine weitere zweckmäßige Ausgestaltung der Erfindung ist dadurch gekennzeichnet, dass der erste Lagerkörper ein weiteres Innenringelement umfasst, wobei das weitere Innenringelement an dem Innenringelement lösbar angeordnet ist. Damit stellt das weitere Innenringelement ein Verbindungselement dar, mittels dessen weitere Komponenten des ersten Lagerkörpers mit dem aus dem ersten Ringelement und dem Innenringelement bestehenden unteren ersten Lagerkörperteils verbunden werden. Ferner kann mittels der lösbaren Verbindung zwischen dem weiteren Innenringelement und dem Innenringelement, der erste untere Lagerkörperteil relativ zu dem weiteren Innenringelement in axialer Richtung bewegt werden, beispielsweise um das untere Lagerkörperteil zu Wartungs-, Reparatur- und/oder Reinigungszwecken abzusenken.

Gemäß einer weiteren bevorzugten Ausbildung der Erfindung ist an dem weiteren Innenringelement ein Montageringelement mit einer axialen Ausnehmung zur Aufnahme der hydraulischen Kupplung angeordnet, wobei das Montageringelement mittels mindestens zwei Querstegen mit dem weiteren Innenringelement verbunden ist. Dies bietet den Vorteil, dass zwischen den Querstegen Freiräume verbleiben, durch die Versorgungsleitungen, beispielsweise Schläuche für Wasser oder Reinigungsflüssigkeiten sowie elektrische und/oder optische Leitungen zur Steuerungs- und Spannungsversorgungszwecken geführt werden können.

Eine weitere vorteilhafte Ausbildung der Erfindung zeichnet sich dadurch aus, dass der erste Lagerkörper relativ zu dem zweiten Lagerkörper in axialer Richtung verstellbar eingerichtet und ausgebildet ist. Somit kann das erfindungsgemäße Wälzlager zu Wartungs-, Reparatur, Inspektions- und Reinigungszwecken auf besonders einfache Weise "geöffnet" und anschließend wieder "geschlossen" werden, ohne das gesamte Wälzlager bzw. die Vorrichtung, in der das Wälzlager verbaut ist, zu demontieren.

Gemäß einer vorteilhaften Ausgestaltung der Erfindung umfasst der erste Lagerring einen ersten äußeren Lagerring und einen separaten ersten inneren Lagerring, so dass der erste Lagerring nicht nur in Umfangsrichtung mehrere Lagerringsegmente umfasst, sondern in den ersten äußeren Lagerring und in den ersten inneren Lagerring geteilt ist. Der erste äußere Lagerring sowie der erste innere Lagerring umfassen wiederrum jeweils mehrere Lagerringsegmente.

Gemäß einer weiteren bevorzugten Ausbildung der Erfindung umfasst der zweite Lagerring einen zweiten äußeren Lagerring und einen separaten zweiten inneren Lagerring. Anders ausgedrückt umfasst der zweite Lagerring nicht nur in Umfangsrichtung mehrere Lagerringsegmente, sondern ist in den zweiten äußeren Lagerring und in den zweiten inneren Lagerring geteilt. Sowohl der zweite äußere Lagerring als auch der zweite innere Lagerring umfassen jeweils wiederrum mehrere Lagerringsegmente.

Gemäß einer besonders bevorzugten Ausbildung der Erfindung sind die Wälzkörper und/oder die Lagerringe aus Kunststoff. Dies bietet insbesondere bei geringen Umdrehungszahlen von unter 30 Umdrehungen pro Minute den Vorteil, dass keine Schmierung des Wälzlagers erforderlich ist, die aus hygienischen Gründen im Bereich der Lebensmittelindustrie andernfalls aus vielerlei Gründen problematisch ist. Ferner sind Kunststoffteile beim Eindringen von Wasser im Gegensatz zu Metallteilen nicht rostanfällig. Es ist daher beispielsweise möglich, Wasser oder andere Flüssigkeiten, die bei der Bearbeitung von Artikeln der fleisch- und fischverarbeitenden Industrie in einer mit dem erfindungsgemäßen Wälzlager versehenen Vorrichtung anfallen, zugleich als Kühl- bzw. Schmierflüssigkeit in dem erfindungsgemäßen Wälzlager zu verwenden. Auch ist es möglich den Flüssigkeiten antibakterielle oder desinfizierende Zusätze beizugeben, um ein mögliches Bakterienwachstum im Wälzlager zu unterbinden. Gemäß einer weiteren vorteilhaften Ausgestaltung der Erfindung sind die Wälzkörper Kugeln. Aufgrund der geringen Rollreibung der Kugeln ist das erfindungsgemäße Wälzlager so besonders leichtgängig.

Des Weiteren wird die Aufgabe durch eine Rundläufervorrichtung mit den eingangs genannten Merkmalen dadurch gelöst, dass das Karussell mittels mindestens eines Wälzlagers nach einem der Ansprüche 1 bis 9 an der feststehenden Achse drehbar angeordnet ist. Wie bereits eingangs beschrieben wurde, ist das erfindungsgemäße Wälzlager besonders leicht zu warten bzw. instand zu setzen und darüber hinaus optimal für den Einsatz in einem Umfeld einsetzbar, dass hohe Anforderungen an die Hygiene stellt. Daher eignet sich das erfindungsgemäße Wälzlager insbesondere zum Einsatz in Rundläufervorrichtungen. Flüssigkeiten, die bei der Bearbeitung von Artikeln bzw. herzustellenden Produkten der fleisch- und fischverarbeitenden Industrie entstehen sind häufig bakteriell belastet. Aufgrund der zuvor beschriebenen Möglichkeit, das erfindungsgemäße Wälzlager auf besonders einfache Art und Weise reinigen zu können, ist das erfindungsgemäße Wälzlager optimal eingerichtet, um die hohen Anforderungen im Lebensmittelsektor bezüglich der Hygiene zu erfüllen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: ein erfindungsgemäßes Wälzlager 10 in einer Explosionsdarstellung gemäß einer ersten beispielhaften Ausführungsform der vorliegenden Erfindung,
- Fig. 2: eine weitere beispielhafte Ausführung des erfindungsgemäßen Wälzlagers 10 in einer Explosionsdarstellung,
- Fig. 3: eine Draufsicht sowie ein Schnittbild gemäß der Schnittlinie A-A eines Teils einer beispielhaften Rundläufervorrichtung und
- Fig. 4: den in der Figur 3 gezeigten Teil der Rundläufervorrichtung in perspektivischer Darstellung.

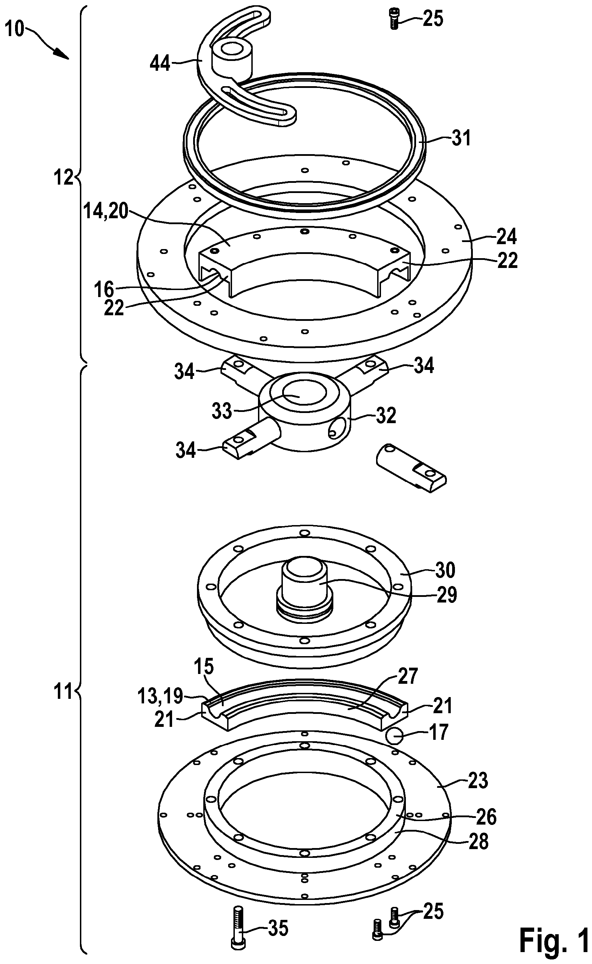

In der Figur 1 ist ein erfindungsgemäßes Wälzlager 10 in einer Explosionsdarstellung gemäß einer ersten beispielhaften Ausführungsform der vorliegenden Erfindung gezeigt. Das Wälzlager 10 umfasst einen ersten Lagerkörper 11 und einen zweiten Lagerkörper 12. Der erste Lagerkörper 11 und der zweite Lagerkörper 12 sind um eine - in der Figur 1 nicht gezeigte - Achse 41 relativ zueinander drehbar angeordnet. Der erste Lagerkörper 11 umfasst einen ersten Lagerring 13 und der zweite Lagerkörper 12 einen zweiten Lagerring 14. Die ersten und zweiten Lagerringe 13, 14 weisen erste Laufflächen 15 und zweite Laufflächen 16 auf, die zur Aufnahme mehrerer Wälzkörper 17 ausgebildet und eingerichtet sind. Die Laufflächen 15, 16 sind vorzugsweise korrespondierend zur Geometrie der Wälzkörper 17 derart ausgebildet, dass die zwischen den Laufflächen 15,16 angeordneten Wälzkörper 17 von den Laufflächen 15, 16 geführt werden. Besonders bevorzugt sind die Laufflächen 15, 16 rillenförmig ausgebildet.

Wie in der Figur 1 gezeigt sind die ersten und zweiten Lagerringe 13, 14 mehrteilig ausgebildet, d.h. die Lagerringe 13, 14 umfassen mehrere Lagerringsegmente 19, 20, nämlich der erste Lagerring 13 die ersten Lagerringsegmente 19 und der zweite Lagerring 14 die zweiten Lagerringsegmente 20, von denen in der Figur 1 zur besseren Übersicht jeweils nur eines gezeigt ist. Vorzugsweise umfasst jeder der Lagerringe 13, 14 jeweils mindestens zwei der Lagerringsegmente 19, 20. Besonders bevorzugt umfasst jeder der Lagerringe 13, 14 vier Lagerringsegmente 19, 20. Grundsätzlich ist jede Anzahl an Lagerringsegmenten 19, 20 größer als zwei geeignet. Bezeichnet n jeweils die Anzahl der ersten bzw. zweiten Lagerringsegmente 19, 20, so bestimmt sich der Mittelpunktswinkel jedes Lagerringsegments 19, 20 gemäß der Beziehung α = 360° / n. Folglich bilden die Lagerringsegmente 19, 20 zusammen immer einen Vollkreis, so dass sich eine vollständig umlaufende und in sich geschlossene Lauffläche 15, 16 ergibt. Vorzugsweise sind die Lagerringsegmente 19, 20 derart ausgebildet, dass diese mit ihren jeweiligen Stirnflächen 21, 22 an die jeweils andere Stirnfläche 21, 22 formschlüssig anliegend angeordnet sind. Das in der Figur 1 gezeigt Wälzlager 10 ist als ein Axiallager 42, also vorzugsweise zur Aufnahme von in Richtung der Achse 41 wirkender Kräfte ausgebildet und eingerichtet.

Der erste Lagerkörper 11 umfasst ein erstes Ringelement 23 sowie der zweite Lagerkörper 12 ein zweites Ringelement 24. An den Ringelementen 23, 24 sind jeweils die ersten und zweiten Lagerringsegmente 19, 20, also die ersten Lagerringsegmente 19 am ersten Ringelement 23 und die zweiten Lagerringsegment 20 am zweiten Ringelement 24 vollständig umlaufend angeordnet. Ferner sind die Lagerringsegmente 19, 20 an den jeweiligen Ringelementen 23, 24 mittels Verbindungsmitteln 25 lösbar angeordnet. Als Verbindungsmittel 25 kommen bevorzugt Gewindeschrauben zum Einsatz. Dazu weisen Lagerringsegmente 19, 20 auf ihrer den Laufflächen 15, 16 abgewandten Seiten entsprechende Gewindebohrungen zur Aufnahme der Verbindungsmittel 25 auf. Die Ringelemente 23, 24 weise ebenfalls dazu korrespondierend positionierte Bohrungen auf, durch die die Gewindeschrauben geführt und die Ringelemente 23, 24 mit den Lagerringsegmenten 19, 20 verbunden werden. Alternativ ist die Verbindung zwischen den Lagerringsegmenten 19, 20 und den Ringelementen 23, 24 als form- und/oder kraftschlüssige Verbindung ausgebildet, beispielsweise als Klemm- und/oder Schnappverbindung.

Die ersten und/oder die zweiten Ringelemente 23, 24 sind scheibenförmig ausgebildet, beispielsweise als Metall- oder Kunststoffscheibenelement. Besonders bevorzugt umfasst der erste Lagerkörper 11 ein Innenringelement 26. Das Innenringelement 26 ist derart ausgebildet, dass die inneren Mantelflächen 27 der ersten Lagerringsegmente 19 an der äußeren Mantelfläche 28 des Innenringelements 26 anliegen. Anders ausgedrückt entspricht der Außendurchmesser des Innenringelements 26 dem Innendurchmesser der aneinander zu einem Vollkreis zusammengefügten Lagerringsegmente 19.

Der erste Lagerkörper 11 umfasst eine hydraulische Kupplung 29 mittels derer der erste Lagerkörper 11 mit - in der Figur 1 nicht gezeigten - Achse 41 verbindbar ist. Die hydraulische Kupplung 29 ist vorzugsweise als hydraulische Klemmhülse ausgebildet. Auf diese Weise kann die Klemmhülse hydraulisch geweitet und so zur Montage über die Achse 41 geschoben werden. Die Verbindung zwischen der Klemmhülse und der Achse 41 kommt anschließend durch die Gefügespannung des Materials, beispielsweise Stahl, der Klemmhülse zustande.

Besonders bevorzugt ist das Innenringelement 26 an dem ersten Ringelement 23 angeordnet. Anders ausgedrückt bildet das Innenringelement 26 eine zylindrische Verlängerung in axialer Richtung des ersten Ringelements 23. Weiter bevorzugt ist das Innenringelement 26 stoffschlüssig mit dem ersten Ringelement 23 verbunden. Vorteilhafter Weise umfasst der erste Lagerkörper 11 ein weiteres Innenringelement 30. Das weitere Innenringelement 30 ist dabei lösbar an dem ersten Innenringelement 26 angeordnet, beispielsweise durch Verschrauben. Der Außendurchmesser des weiteren Innenringelements 30 ist kleiner als der Innendurchmesser des zweiten Ringelements 24, so dass sich zwischen dem weiteren Innenringelement 30 und dem zweiten Ringelement 24 ein Spalt ergibt, der beispielsweise mit einem Dichtring 31 versehen ist.

Bevorzugt ist an dem weiteren Innenringelement 30 ein Montageringelement 32 mit einer axialen Ausnehmung 33 zur Aufnahme der hydraulischen Kupplung 29 angeordnet. Das Montageringelement 32 und die hydraulische Kuppelung 29 sind vorzugsweise kraftschlüssig miteinander verbunden. Das Montageringelement 32 ist mittels mindestens zwei Querstegen 34, besonders bevorzugt mittels drei oder mehr Querstegen 34 mit dem weiteren Innenringelement 30 verbunden. Über das Montageringelement 32, die Querstege 34 und das weitere Innenringelement 30 ist der gesamte erste Lagerkörper 11 an der Achse 41 befestigt.

Der erste Lagerkörper 11 ist relativ zu dem zweiten Lagerkörper 12 in axialer Richtung verstellbar ausgebildet. Hierzu sind beispielsweise - in der Zeichnung nicht gezeigte - axial verlaufende Gewindestangen an dem weiteren Innenringelement 30 angeordnet, die durch Bohrungen des Innenringelements 26 und/oder des ersten Ringelements 23 geführt sind. Auf den freien Enden der Gewindestangen sind Muttern angeordnet, mittels derer das erste Ringelement 23 mit den ersten Lagerringsegmenten 19 abgesenkt, d.h. von dem zweiten Lagerkörper 12 entfernt, und ggf. wieder angehoben, also zu dem zweiten Lagerkörper 12 hinbewegt werden können. Anstelle der Gewindestangen kommen alternativ Gewindeschrauben 35 zum Einsatz, die die Bohrungen des ersten Ringelements 23 und/oder des Innenringelements 26 geführt werden und in entsprechende Gewindebohrungen in dem weiteren Innenringelement 30 münden. Die Gewindeschrauben 35 sind vorzugsweise so lang ausgeführt, dass das erste Ringelement 23 mit den ersten Lagerringsegmenten 19 mittels der Gewindeschrauben 35 weit genug abgesenkt werden kann, um freien Zugang zu den Lagerringsegmenten 19 und den Wälzkörpern 17 zu erhalten.

Optional sind an dem zweiten Ringelement 24 weitere Teile 44 angeordnet, so dass das Ringelement 24 als Trägerplatte für diese dient.

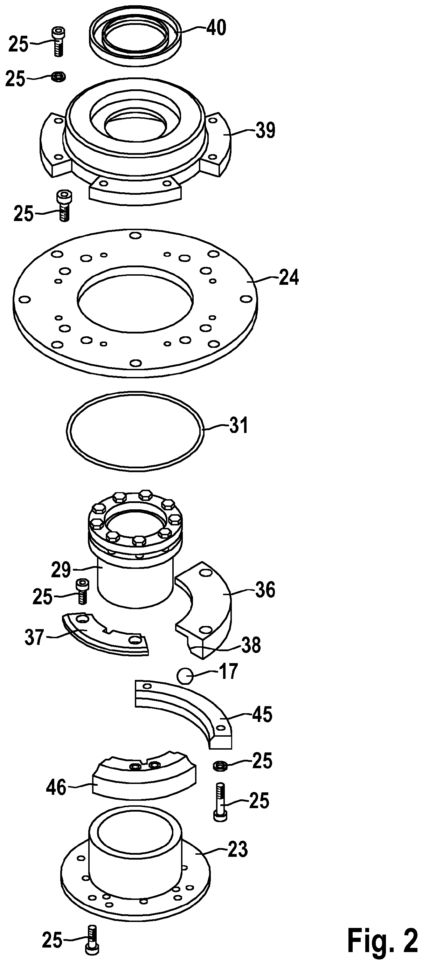

Die Figur 2 zeigt ein weiteres erfindungsgemäßes Wälzlager 10 in Explosionsdarstellung. Das in der Figur 2 gezeigt Wälzlager 10 entspricht im Wesentlichen dem in der Figur 1 gezeigten Wälzlager 10, so dass auf die zuvor gemachten Ausführen vollumfänglich verwiesen und im Folgenden nur auf die Unterschiede eingegangen wird. Ein wesentlicher Unterschied zu dem in der Figur 1 gezeigten Wälzlager 10 besteht darin, dass der zweite Lagerring 14 einen zweiten äußeren Lagerring 36 und einen separaten zweiten inneren Lagerring 37 umfasst. Sowohl der zweite äußere Lagerring 36 als auch der zweite innere Lagerring 37 sind jeweils - wie bereits im Zusammenhang mit der Figur 1 zu vor beschrieben - aus mehreren Lagerringsegmenten zusammengesetzt.

Besonders bevorzugt umfasst der erste Lagerring 13 ferner einen ersten äußeren Lagerring 45 und einen separaten ersten inneren Lagerring 46. Der erste äußere Lagerring 45 und der separate erste innere Lagerring 46 sind jeweils aus mehreren Lagerringsegmenten zusammengesetzt. Vorteilhafter Weise sind der erste innere Lagerring 46 und der zweite innere Lagerring 37 derart ausgebildet, dass die von diesen gebildete Lauffläche die Wälzkörper 17 zu mehr als 180° umschließt. So wird beim Öffnen des Wälzlagers 10 ein unerwünschtes Herausfallen der Wälzkörper 17 zuverlässig vermieden. Anders ausgedrückt können der erste äußere Lagerring 45 sowie der zweite äußere Lagerring 36 demontiert werden, während die Wälzkörper 17 durch den ersten inneren Lagerring 46 und den zweiten inneren Lagerring 37 gehalten an der Lauffläche verbleiben. Um die Wälzkörper 17 aus ihrer Umschließung freizugeben, sind die - beispielsweise miteinander verschraubten - ersten und zweiten inneren Lagerringe 46, 37 voneinander zu lösen und zumindest soweit auseinander zu bewegen, dass die Wälzkörper 17 freikommen.

Das in der Figur 2 gezeigt erfindungsgemäße Wälzlager 10 umfasst bevorzugt kein weiteres Innenringelement 30 sowie keine Montageringelement 32, das an diesem angeordnet wäre. Vielmehr ist die hydraulische Kupplung 29 unmittelbar in dem Innenringelement 26 kraftschlüssig angeordnet. Weiter bevorzugt umfasst der zweite Lagerkörper 12 eine Abdeckhaube 39 sowie eine die Achse 41 umgebende Wellendichtung 40.

Vorzugsweise sind die in den Figuren 1 und 2 gezeigten Wälzkörper 17 und/oder die Lagerringe 13, 14, 36, 37, 45, 46 aus Kunststoff. Weiter bevorzugt sind die Wälzkörper 17 als Kugeln ausgebildet. Alternativ sind die Wälzkörper 17 als Zylinder- oder Kegelrollen ausgebildet.

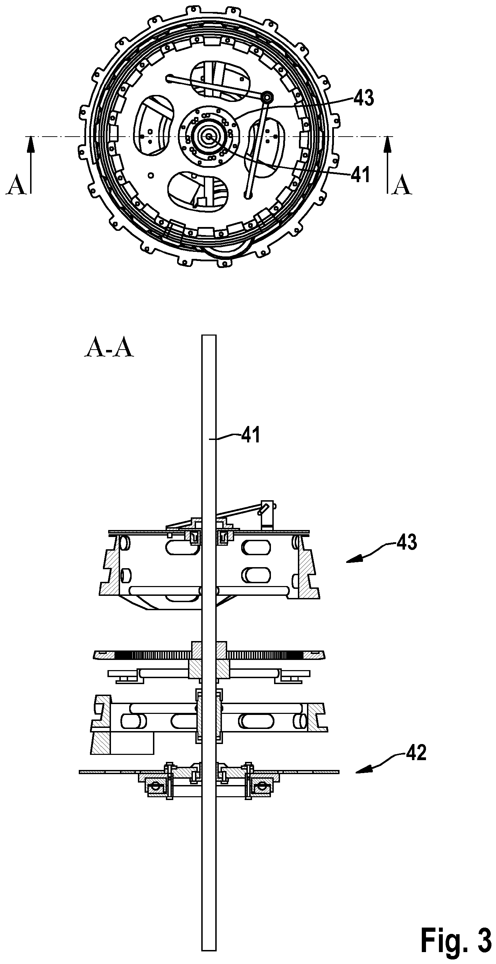

In der Figur 3 ist eine Draufsicht sowie ein Schnittbild gemäß der Schnittlinie A-A eines Teils einer beispielhaften Rundläufervorrichtung gezeigt, in dem das erfindungsgemäße Wälzlager 10 verbaut ist. In der Figur 3 ist u.a. die feststehende Achse 41 sowie einerseits das in der Figur 1 gezeigte und zuvor beschrieben erfindungsgemäße Wälzlager 10 in Form eines Axiallagers 42 sowie das in der Figur 2 gezeigte und zuvor beschriebene erfindungsgemäße Wälzlager 10 in Form eines Radiallagers 43 gezeigt.

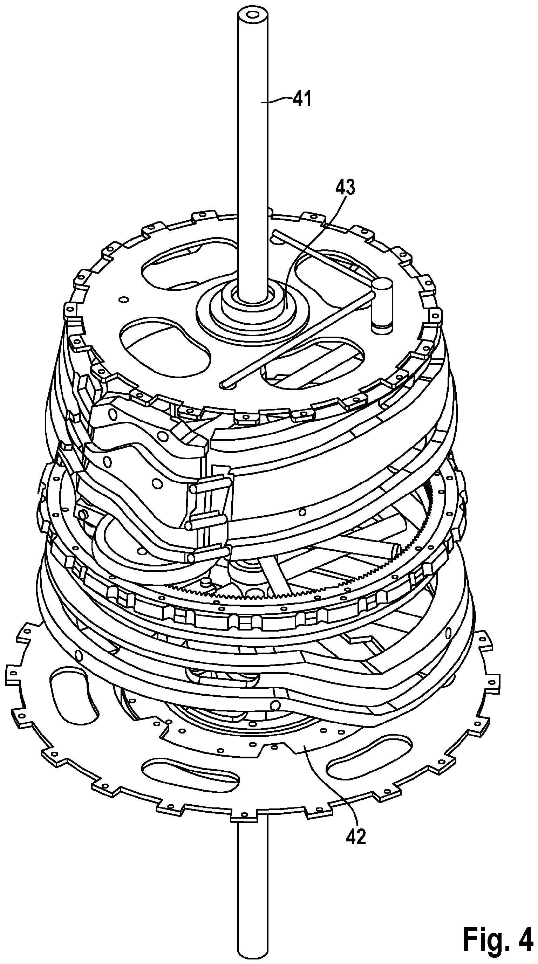

Figur 4 zeigt den in der Figur 3 gezeigten Teil der Rundläufervorrichtung nochmals in perspektivischer Darstellung. Da die weiteren in den Figuren 3 und 4 gezeigten Komponenten der Rundläufervorrichtung aus dem Stand der Technik hinlänglich bekannt sind, wird auf eine weiterführende Beschreibung dieser Komponenten verzichtet.

Die Schmierung der in den Figuren 1 bis 4 gezeigten erfindungsgemäßen Wälzlager 10 erfolgt bevorzugt durch Wasser als Gleit- bzw. Schmiermittel. Vorzugsweise umfasst das Wälzlager 10 weitere - in der Zeichnung nicht gezeigte - Einrichtungen, die zum Einbringen von Wasser zwischen die Wälzkörper 17 und die ersten und zweiten Laufflächen 15, 16 ausgebildet und eingerichtet sind. Besonders bevorzugt umfasst das Wälzlager 10 ferner Abführeinrichtungen, mittels derer das eingebrachte Wasser aus dem inneren Lagerbereich, insbesondere von den ersten und zweiten Laufflächen 15, 16 abgeführt werden kann. Derartige Abfuhreinrichtungen umfassen beispielsweise eine Mehrzahl von Durchgangsbohrungen, die in dem ersten und zweiten Lagerringen 13, 14 angeordnet sind. Mittels dieser Durchgangsbohrungen kann eingebrachtes Wasser abfließen. Besonders bevorzugt ist das Wasser mit antibakteriellen Zusätzen versehen, die das Bakterienwachstum hemmen bzw. unterbinden und so einer andernfalls möglichen Verkeimung des Wälzlagers effektiv entgegenzuwirken.

## Patentansprüche

1. Wälzlager (10), umfassend
einen ersten und einen zweiten Lagerkörper (11, 12), die relativ zueinander um eine Achse (41) drehbar angeordnet sind,
wobei die Lagerkörper (11, 12) erste und zweite Lagerringe (13, 14) mit einander zugewandten und zur Aufnahme einer Mehrzahl von Wälzkörpern (17) ausgebildeten und eingerichteten Laufflächen (15, 16) umfassen,
wobei die Wälzkörper (17) zwischen den Laufflächen (15, 16) der Lagerringe (13, 14) angeordnet sind, wobei
die Lagerringe (13, 14) mehrteilig mittels voneinander lösbaren Lagerringsegmenten (19, 20) ausgebildet sind,
der erste Lagerkörper (11) relativ zu dem zweiten Lagerkörper (12) in axialer Richtung verstellbar eingerichtet und ausgebildet ist,
**dadurch gekennzeichnet, dass**
die Lagerkörper (11, 12) jeweils ein erstes Ringelement (23) und ein zweites Ringelement (24) umfassen, wobei die ersten Lagerringsegmente (19) an dem ersten Ringelement (23) und die zweiten Lagerringsegmente (20) an dem zweiten Ringelement (24) vollständig umlaufend mittels Verbindungsmitteln (25) lösbar angeordnet sind, und
das erste Ringelement (23) und/oder das zweite Ringelement (24) zumindest im Wesentlichen scheibenförmig ausgebildet sind/ist und
der erste Lagerkörper (11) mit einer hydraulischen Kupplung (29) zum Befestigen des ersten Lagerkörpers (11) an der Achse (41) verbunden ist.

2. Wälzlager (10) nach Anspruch 1, **dadurch gekennzeichnet, dass** ein Innenringelement (26) an dem ersten Ringelement (23) angeordnet ist.

3. Wälzlager (10) nach einem der Ansprüche 1 oder 2, **dadurch gekennzeichnet, dass** der erste Lagerkörper (11) das Innenringelement (26) umfasst, wobei die inneren Mantelflächen (27) der ersten Lagerringsegmente (19) formschlüssig an der äußeren Mantelfläche (28) des Innenringelements (26) anliegen.

4. Wälzlager (10) nach einem der Ansprüche 1 bis 3, **dadurch gekennzeichnet, dass** der erste Lagerkörper (11) ein weiteres Innenringelement (30) umfasst, wobei das weitere Innenringelement (30) an dem Innenringelement (26) lösbar angeordnet ist.

5. Wälzlager (10) nach Anspruch 4, **dadurch gekennzeichnet, dass** an dem weiteren Innenringelement (30) ein Montageringelement (32) mit einer axialen Ausnehmung (33) zur Aufnahme der hydraulischen Kupplung (29) angeordnet ist, wobei das Montageringelement (32) mittels mindestens zwei Querstegen (34) mit dem weiteren Innenringelement (30) verbunden ist.

6. Wälzlager (10) nach einem der Ansprüche 1 bis 5, **dadurch gekennzeichnet, dass** der erste Lagerring (13) einen ersten äußeren Lagerring (45) und einen separaten ersten inneren Lagerring (46) umfasst.

7. Wälzlager (10) nach einem der Ansprüche 1 bis 6, **dadurch gekennzeichnet, dass** der zweite Lagerring (14) einen zweiten äußeren Lagerring (36) und einen separaten zweiten inneren Lagerring (37) umfasst.

8. Wälzlager (10) nach einem der Ansprüche 1 bis 7, **dadurch gekennzeichnet, dass** die Wälzkörper (17) und/oder die Lagerringe (12, 13, 36, 37, 45, 46) aus Kunststoff sind.

9. Wälzlager (10) nach einem der Ansprüche 1 bis 8, **dadurch gekennzeichnet, dass** die Wälzkörper (17) Kugeln sind.

10. Rundläufervorrichtung, umfassend eine feststehende Achse (41) und ein um die feststehende Achse (41) drehbar angeordnetes Karussell zur Aufnahme von zu bearbeitenden Artikeln der fisch- und fleischverarbeitenden Industrie, **dadurch gekennzeichnet, dass** das Karussell mittels mindestens eines Wälzlagers (10) nach einem der Ansprüche 1 bis 9 an der feststehenden Achse (41) drehbar angeordnet ist.

## Claims

1. Rolling bearing (10), comprising
a first and a second bearing body (11, 12) which are arranged to be rotatable relative to one another about an axis (41),
wherein the bearing bodies (11, 12) comprise first and second bearing rings (13, 14) having running surfaces (15, 16) which face one another and are designed and adapted to receive a plurality of rolling bodies (17),
wherein the rolling bodies (17) are arranged between the running surfaces (15, 16) of the bearing rings (13, 14), wherein
the bearing rings (13, 14) are designed in multipart form by means of bearing ring segments (19, 20) which are detachable from one another,
the first bearing body (11) is adapted and designed to be displaceable in the axial direction relative to the second bearing body (12),
**characterized in that**
the bearing bodies (11, 12) each comprise a first ring element (23) and a second ring element (24), wherein the first bearing ring segments (19) are detachably arranged on the first ring element (23) and the second bearing ring segments (20) are detachably arranged on the second ring element (24) over the entire periphery by means of connection means (25), and
the first ring element (23) and/or the second ring element (24) are/is at least substantially disc-shaped and
the first bearing body (11) is connected to a hydraulic coupling (29) for fastening the first bearing body (11) to the axis (41).

2. Rolling bearing (10) according to claim 1, **characterised in that** the interior ring element (26) is arranged on the first ring element (23).

3. Rolling bearing (10) according to one of claims 1 or 2, **characterised in that** the first bearing body (11) comprises an interior ring element (26), wherein the inner peripheral surfaces (27) of the first bearing ring segments (19) abut the outer peripheral surface (28) of the interior ring element (26) in a positive locking manner.

4. Rolling bearing (10) according to any one of claims 1 to 3, **characterised in that** the first bearing body (11) comprises a further interior ring element (30), wherein the further interior ring element (30) is detachably arranged on the interior ring element (26).

5. Rolling bearing (10) according to claim 4, **characterised in that** a mounting ring element (32) having an axial recess (33) for receiving the hydraulic coupling (29) is arranged on the further interior ring element (30), wherein the mounting ring element (32) is connected to the further interior ring element (30) by means of at least two transverse webs (34).

6. Rolling bearing (10) according to any one of claims 1 to 5, **characterised in that** the first bearing ring (13) comprises a first outer bearing ring (45) and a separate first inner bearing ring (46).

7. Rolling bearing (10) according to any one of claims 1 to 6, **characterised in that** the second bearing ring (14) comprises a second outer bearing ring (36) and a separate second inner bearing ring (37).

8. Rolling bearing (10) according to any one of claims 1 to 7, **characterised in that** the rolling bodies (17) and/or the bearing rings (12, 13, 36, 37, 45, 46) are made of plastics material.

9. Rolling bearing (10) according to any one of claims 1 to 8, **characterised in that** the rolling bodies (17) are balls.

10. Rotary device, comprising a fixed axis (41) and a carousel which is arranged to be rotatable about the fixed axis (41) and is to receive items for processing in the fish and meat processing industry, **characterised in that** the carousel is rotatably arranged on the fixed axis (41) by means of at least one rolling bearing (10) according to any one of claims 1 to 9.

## Revendications

1. Roulement (10), comprenant
un premier et un deuxième corps de roulement (11, 12) agencés de manière à pouvoir tourner l'un par rapport à l'autre autour d'un axe (41),
les corps de roulement (11, 12) comprenant une première et une deuxième bague de roulement (13, 14) avec des surfaces de roulement (15, 16) conçues et constituées tournées l'une vers l'autre et destinées à recevoir une pluralité de corps de roulement (17),
les corps de roulement (17) étant agencés entre les surfaces de roulement (15, 16) des bagues de roulement (13, 14),
lesdites bagues de roulement (13, 14) étant constituées en plusieurs parties au moyen de segments de bague de roulement (19, 20) détachables les uns des autres,
le premier corps de roulement (11) étant conçu et constitué susceptible d'être ajusté dans le sens axial par rapport au deuxième corps de roulement (12),
**caractérisé en ce que**
les corps de roulement (11, 12) comprennent respectivement un premier élément de bague (23) et un deuxième élément de bague (24), les premiers segments de bague de roulement (19) étant agencés sur le premier élément de bague (23) et les deuxièmes segments de bague de roulement (20) sur le deuxième élément de bague (24), sur tout le tour et de manière détachable par des moyens de liaison (25), et
le premier élément de bague (23) et/ou le deuxième élément de bague (24) est/sont constitué(s) au moins sensiblement en forme de disque, et
le premier corps de roulement (11) est relié à un embrayage hydraulique (29) destiné à fixer le premier corps de roulement (11) sur l'axe (41).

2. Roulement (10) selon la revendication 1, **caractérisé en ce qu'**un élément de bague intérieur (26) est agencé sur le premier élément de bague (23).

3. Roulement (10) selon l'une quelconque des revendications 1 ou 2, **caractérisé en ce que** le premier corps de roulement (11) comprend l'élément de bague intérieur (26), les surfaces de paroi intérieure (27) des premiers segments de bague de roulement (19) venant épouser de manière solidaire la surface de paroi extérieure (28) de l'élément de bague intérieur (26).

4. Roulement (10) selon l'une quelconque des revendications 1 à 3, **caractérisé en ce que** le premier corps de roulement (11) comprend un autre élément de bague intérieur (30), l'autre élément de bague intérieur (30) étant agencé de manière détachable sur l'élément de bague intérieur (26).

5. Roulement (10) selon la revendication 4, **caractérisé en ce qu'**un élément de bague de montage (32), doté d'une cavité axiale (33) destinée à recevoir l'embrayage hydraulique (29), est agencé sur l'autre élément de bague intérieur (30), l'élément de bague de montage (32) étant relié à l'autre élément de bague intérieur (30) par au moins deux entretoises (34).

6. Roulement (10) selon l'une quelconque des revendications 1 à 5, **caractérisé en ce que** la première bague de roulement (13) comprend une première bague de roulement extérieure (45) et une première bague de roulement intérieure (46) séparée.

7. Roulement (10) selon l'une quelconque des revendications 1 à 6, **caractérisé en ce que** la deuxième bague de roulement (14) comprend une deuxième bague de roulement extérieure (36) et une deuxième bague de roulement intérieure (37) séparée.

8. Roulement (10) selon l'une quelconque des revendications 1 à 7, **caractérisé en ce que** les corps de roulement (17) et/ou les bagues de roulement (12, 13, 36, 37, 45, 46) sont en matière plastique.

9. Roulement (10) selon l'une quelconque des revendications 1 à 8, **caractérisé en ce que** les corps de roulement (17) sont des billes.

10. Dispositif tournant comprenant un axe fixe (41) et un carrousel agencé de manière à pouvoir tourner autour de l'axe fixe (41), destiné à recevoir des articles à traiter en provenance de l'industrie de traitement des poissons et de la viande, **caractérisé en ce que** le carrousel est agencé sur l'axe fixe (41) par au moins un roulement (10) selon l'une quelconque des revendications 1 à 9, de manière à pouvoir tourner.
